(19) Europäisches Patentamt
European Patent Office
Office européen des brevets

(11) **EP 3 357 371 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(51) Int Cl.:
***A45F 3/08*** *(2006.01)*      ***B62H 3/00*** *(2006.01)*
***A45F 3/00*** *(2006.01)*      ***B62J 99/00*** *(2020.01)*

(21) Anmeldenummer: **18154856.1**

(22) Anmeldetag: **02.02.2018**

(54) **RUCKSACKTRAGESYSTEM ZUM FREIHÄNDIGEN RÜCKENTRANSPORT EINES FAHRRADES**

BACKPACK SUPPORT SYSTEM FOR HANDS-FREE TRANSPORT OF A BIKE ON THE WEARER'S BACK

SYSTÈME PORTEUR POUR SAC À DOS DESTINÉ TRANSPORT DORSAL MAINS LIBRES D'UN VÉLO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2017 DE 202017100591 U**

(43) Veröffentlichungstag der Anmeldung:
**08.08.2018 Patentblatt 2018/32**

(73) Patentinhaber: **AFR Engineering GmbH 80809 München (DE)**

(72) Erfinder:
 • **Donhauser, Dominik 80804 München (DE)**
 • **Wimmer, Teresa 85567 Grafing b. München (DE)**
 • **Setzmüller, Roman 85250 Altomünster (DE)**
 • **Overbeck, Christine 80339 München (DE)**
 • **Weinkauf, Felix 80333 München (DE)**
 • **Standl, Ludwig 82389 Böbing (DE)**
 • **Ruhland, Florian 85435 Erding (DE)**
 • **Andreas, Funkenhauser 85617 Aßling (DE)**

(74) Vertreter: **Misselhorn, Hein-Martin Patent- und Rechtsanwalt Am Stein 10 85049 Ingolstadt (DE)**

(56) Entgegenhaltungen:
**EP-A1- 2 762 032      CZ-U1- 3 470
US-A- 5 016 794      US-A1- 2002 125 278**

EP 3 357 371 B1

**Beschreibung**

Die Erfindung betrifft ein Rucksacktragesystem nach dem Oberbegriff des Anspruchs 1 und der weiteren Ansprüche.

**TECHNISCHER HINTERGRUND**

Wer anspruchsvollere Mountainbike-Touren im Hochgebirge unternimmt, ist immer wieder damit konfrontiert, Strecken überwinden zu müssen, auf denen der Untergrund so schlecht und/oder steil ist, dass das Rad auf dieser Strecke auch mit großem Geschick weder gefahren noch geschoben werden kann. Das Rad muss dann getragen werden, was ermüdend ist.

Hierzu werden verschiedene Techniken empfohlen.

Bei kurzen Schiebestrecken wird das Rad am Rahmen oder der Hinterradschwinge unterhalb des Sattelrohrs gegriffen, angehoben und seitlich getragen.

Alternativ wird das Rad seitlich über der Schulter getragen, indem man mit einem Arm durch das Rahmendreieck greift und das Rad dann auf eine Schulter setzt, was wegen der sehr ungleichmäßigen Lastverteilung schnell unbequem wird.

Längere oder steilere Schiebestrecken sind oft nur noch zu bewältigen, wenn das Rad über Kopf getragen wird. Zu diesem Zweck steckt man den Kopf durch das Rahmendreieck und legt sich das Rad auf beide Schultern. Diese Art des Transports ist etwas bequemer, aber nicht ungefährlich, da das Rad im Fall eines Wegrutschens auf losem Untergrund nicht spontan abgeworfen werden kann.

Um das Tragen angenehmer zu machen, ist bereits auch schon vorgeschlagen worden, den Rucksack so zu packen, dass der Rahmen des Rades bei dieser Art des Tragens teilweise auf dem Deckel des Rucksacks lastet anstatt auf den Schultern.

Es sind auch schon entsprechende Polster in Gestalt von aufblasbaren Luftkissen vorgeschlagen worden, die in einen Rucksack, integriert sind, um das Tragen einfacher zu machen, vgl. DE 20 2011 072 U1.

Dennoch ist auch bei dieser Art des Tragens nicht daran zu denken, beide Hände frei zu bekommen, um etwa klettern zu können oder sich irgendwo abstützen zu können.

Ebenfalls bereits bekannt sind Rad-Transportrucksäcke, deren Laderaum das zerlegte oder gefaltete Rad aufnimmt und die dann auf dem Rücken getragen werden. Im Hochgebirge eignen sich solche Rucksäcke wegen ihrer Größe nicht, sie stellen aber eine bequeme Möglichkeit dar, das Rad beispielsweise am Flughafen zur Gepäckaufgabe zu bringen.

Aus dem tschechischen Gebrauchsmuster CZ 3470 U ist ein Rad-Transporttragegestell mit Rucksackträgern bekannt. Das Rad wird quer aufgeladen, beide Reifen zeigen dabei nach unten. Das Tragegestell besitzt einen U-förmigen Haken in den das Rad mit seiner Tretlagerachse eingehängt wird. Darüber hinaus wird das Rad an verschiedenen weiteren Stellen mit Seilen oder Riemen mit dem Tragegestell verzurrt. Die durch den Tretlager-Haken vorgegebene Trageposition ist gerade auf schmalen Wegen, wie im Gebirge, ungünstig. Die Befestigung des Rades am Tragegestell ist aufwendig.

**DAS DER ERFINDUNG ZUGRUNDE LIEGENDE PROBLEM**

Die Erfindung hat sich zur Aufgabe gemacht, ein Transportsystem zu schaffen, mit dem ein ganzes Fahrrad am Körper getragen werden kann, ohne das Fahrrad zerlegen oder zusammenfalten zu müssen, wobei die Hände des Trägers oder der Trägerin während des Tragens frei bleiben und auch enge Passagen sicher passiert werden können.

**DIE ERFINDUNGSGEMÄSSE LÖSUNG**

Diese Aufgabe wird durch ein Rucksacktragesystem mit den Merkmalen des Anspruchs 1 gelöst.

Das erfindungsgemäße Rucksacktragesystem gestattet den freihändigen Rückentransport eines Fahrrades.

Zu diesem Zweck besitzt das Rucksacktragesystem ein mit Schulterträgern und vorzugsweise auch einem Hüftgurt ausgerüstetes Gestell, das im Regelfall in sich starr ist. Das bedeutet, dass das Gestell unter den im Betrieb auftretenden Lasten nur um die unvermeidlichen Beträge im Millimeterbereich nachgibt, um die jeder starre Körper beim Aufbringen von Last nachgibt.

An dem Gestell ist eine Fahrradhalterung befestigt. Die Fahrradhalterung ist so gestaltet, dass das Fahrrad, meist ausschließlich mit seinem Rahmen oder Rahmenbestandteilen, wie der Hinterradschwinge, unmittelbar an dem Gestell befestigt werden kann, also ohne dass sich an den Punkten, an denen das Fahrrad unmittelbar am Gestell anliegt, Gepäck oder ein Gepäckraum zwischen dem Fahrrad und dem Gestell befindet. Bei bestimmungsgemäßer Befestigung ist das Fahrrad also unbeweglich am Gestell fixiert. Es schwankt nicht hin und her, anders als ein Fahrrad, das außen auf die am Gepäckraum eines Rucksacks angebrachten Verzurrösen aufgeschnallt ist. Das bedeutet in manchen Fällen, dass das Fahrrad in dem Sinne sicher in den Haltern liegt. Zwar kann es sich bei erhöhtem Drehmoment - z. B. gegen der UZS nach links - wegdrehen. Es fällt aber durch die günstige Schwerpunktlage immer wieder zurück in den oberen Halter.

Die Verankerungen sind zur Festlegung des Fahrrads unmittelbar an dem Gestell als zumindest in sich starre Haken ausgeführt, in die das Fahrrad einfach eingehängt werden kann, vorzugsweise ohne dass irgendwelche Schnallen, Stricke oder Verschlüsse geschlossen oder zugebunden werden müssen. Gleichzeitig kann der jeweilige Haken auch starr an dem Gestell befestigt sein. Idealerweise ist die Befestigung des Hakens indes so gestaltet, dass der Haken bei Nichtgebrauch weggedreht bzw. eingeklappt werden kann, etwa so, dass er parallel zu der Ebene liegt, die durch das Gestell aufgespannt wird, jedenfalls in der unmittelbaren Umgebung des Hakens.

Einer der Haken ist nach oben geöffnet, sodass das Fahrrad von oben her in diesen Haken eingehängt werden kann. Der andere Haken ist seitlich in Richtung hin zu dem nach oben geöffneten Haken geöffnet, sodass das Fahrrad nach dem Einsetzen in die nach oben geöffneten Haken in diesen anderen Haken seitlich hineingeschwenkt werden kann.

Die Fahrradhalterung besteht dabei mindestens oder vorzugsweise nur aus einer ersten und einer zweiten Verankerung, die räumlich voneinander getrennt sind, vorzugsweise um mindestens 150 mm. Im Regelfall sind das Gestell und die Verankerungen so ausgebildet und angeordnet, dass das Fahrrad derart an dem Gestell befestigt werden kann, dass es hochkant und quer zu seiner eigentlichen Fahrtrichtung getragen wird, also mit dem Vorderreifen nach oben und zumindest mit dem Hinterreifen (vollständig bzw. im Wesentlichen) senkrecht zur Laufrichtung der das Fahrrad tragenden Person. Dadurch können auch schmale Passagen mit dem Fahrrad am Rücken durchquert werden.

## AUSGESTALTUNGSFORMEN DER ERFINDUNGSGEMÄSSEN LÖSUNG

Zweckmäßigerweise weist das erfindungsgemäße Rucksacktragesystem einen sogenannten Außenrahmen auf. Während bei normalen Rucksäcken, die einen Rahmen besitzen, dieser Rahmen vor der dem Rücken des Trägers zugewandten Seite des Gepäckraums liegt oder in die dem Rücken des Trägers zugewandte Seite des Gepäckraums eingearbeitet ist und sich dann nach außen der Gepäckraum anschließt, ist es bei dem erfindungsgemäßen Rucksacktragesystem bevorzugt gerade umgekehrt. Ein Gepäckraum ist dem Rücken des Trägers unmittelbar benachbart oder liegt auf dem Rücken des Trägers auf. Erst auf der dem Rücken des Trägers abgewandten Seite dieses Gepäckraums ist außen der Rahmen oder ist ein Teil des Rahmens angeordnet, beispielsweise eine Rückenplatte. An diesem außenliegenden Teil des Rahmens oder an dessen Rückenplatte wird das Fahrrad fixiert.

Es kann eine Hauptgepäcktasche vorgesehen sein, die immer dann, wenn kein Fahrrad aufgeladen ist, auf die dem Rücken des Trägers abgewandte Seite des Außenrahmens aufgesetzt wird, sodass der Außenrahmen in diesem Zustand wie beim Sandwich zwischen dem unmittelbar auf dem Rücken aufliegenden Gepäckraum und der Hauptgepäcktasche liegt.

Schutz wird auch für ein Verfahren zum Tragen eines Fahrrades beansprucht, das sich dadurch auszeichnet, dass das Fahrrad hochkant mit dem Vorderrad nach oben und mit dem Hinterrad senkrecht zur Laufrichtung des Trägers auf dem Rücken getragen wird. Sodann wird auch Verfahrensschutz beansprucht, bei dem das Fahrrad dadurch am Gestell eines Rucksacks befestigt wird, dass es, wenn man das Rucksacktragesystem in Gebrauchsposition sieht, erst von oben her in einen unteren Haken am Gestell des Rucksacks eingehängt wird und dann seitlich in den anderen Haken am Gestell des Rucksack hineingeschwenkt wird, wobei der untere Haken gegenüber dem Schwerpunkt des Fahrrads so positioniert ist, dass das Fahrrad dauerhaft die Tendenz hat, so um den unteren Haken zu drehen, dass es in den oberen Haken hineinschwenkt. Wie und mit welchen Rahmenteilen das Fahrrad in die Haken eingehängt wird, ist an späterer Stelle noch genauer beschrieben. Das Verfahren bedient sich der erfindungsgemäßen Vorrichtung und den verschiedenen Ausgestaltungsmöglichkeiten der erfindungsgemäßen Vorrichtung.

Schutz wird auch beansprucht für die Verwendung mindestens zweier mit Abstand voneinander am Gestell eines Rucksacks befestigter Haken zum Einhängen und auf dem Rücken Tragen eines Fahrrades in Hochkantposition und mit dem Hinterrad quer zur Laufrichtung des Trägers.

Weitere Ausgestaltungsmöglichkeiten, Wirkungsweisen und Vorteile ergeben sich aus der nachfolgenden Beschreibung eines Ausführungsbeispiels der Erfindung.

## FIGURENLISTE

Die Figur 1 zeigt ein erstes Ausführungsbeispiel des erfindungsgemäßen Rucksacktragesystems vor dem Aufladen des Fahrrades schräg von hinten.

Die Figur 2 zeigt, wie das Fahrrad mit dem System gem. Fig. 1 nach dem Aufladen auf den Rucksack getragen wird.

Die Figur 3 zeigt das erfindungsgemäße Rucksacktragesystem gem. Fig. 1 schräg von vorne, vor dem Aufladen des Fahrrades.

Die Figur 4 zeigt ergänzend zur Fig. 1 die genaue Ausgestaltung eines der Haken.

Die Figur 5 zeigt das erfindungsgemäße Rucksacktragesystem gem. Fig. 1 von hinten mit aufgesetzter Hauptgepäcktasche.

Die Figur 6 zeigt das erfindungsgemäße Rucksacktragesystem gem. Fig. 1 schräg von vorne, ebenfalls mit aufgesetzter Hauptgepäcktasche.

Die Figur 7 zeigt die bei der Verwendung der erfindungsgemäßen Haken auftretenden Kräfte und Momentenverhältnisse.

Die Figur 8 zeigt ein zweites Ausführungsbeispiel der Erfindung.

Die Figur 9 zeigt ein drittes Ausführungsbeispiel und hiervon den Hilfsrahmen.

Die Figur 10 zeigt einen Aufnahmepin 27, wie er im Rahmen des dritten Ausführungsbeispiels zum Einsatz kommt, aber auch für die anderen Ausführungsbeispiele verwendet werden kann.

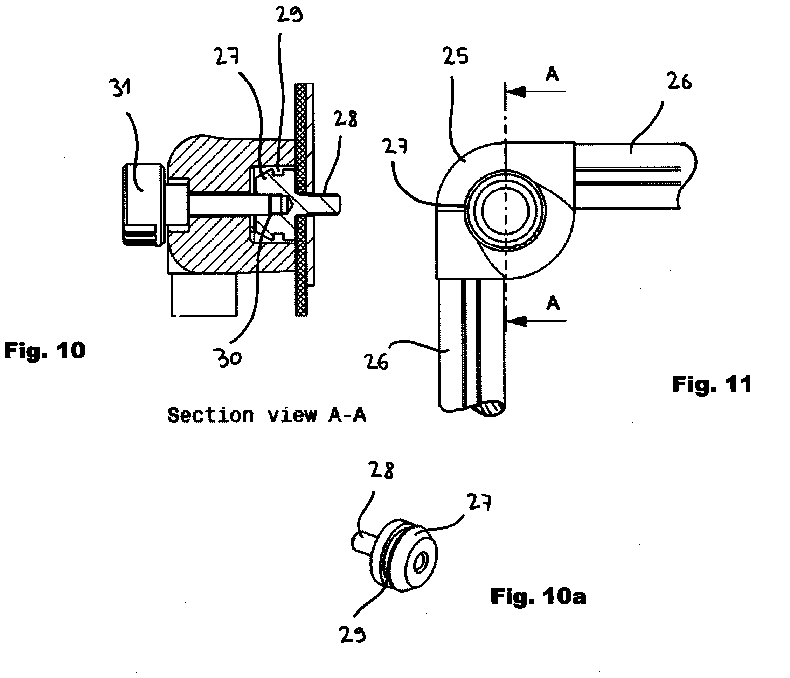

Die Figur 10 a zeigt einen Aufnahmepin 27 in Einzelansicht.

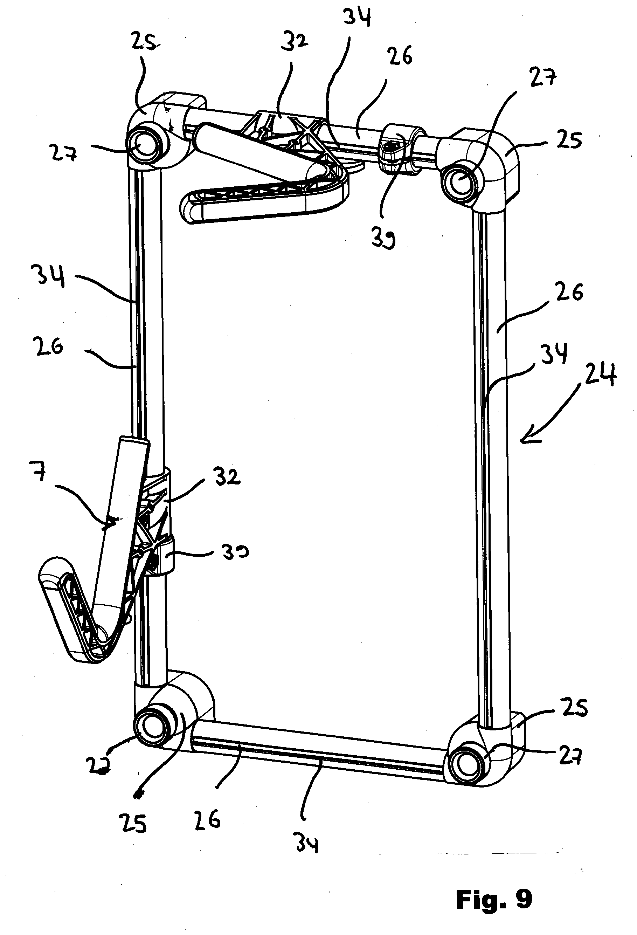

Die Figur 11 zeigt eine vergrößerte Ansicht einer Ecke des Hilfsrahmens gemäß Figur 9.

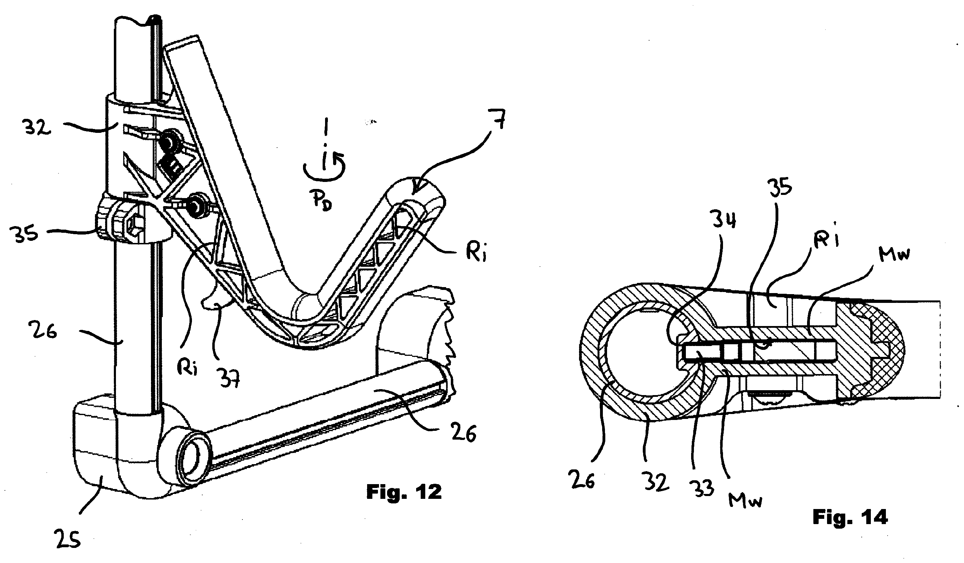

Die Figur 12 zeigt einen Haken 7 in Detailansicht, dieser Haken kommt insbesondere für das dritte Ausführungsbeispiel zum Einsatz, kann aber auch im Rahmen der Ausführungsbeispiele 1 und 2 eingesetzt werden.

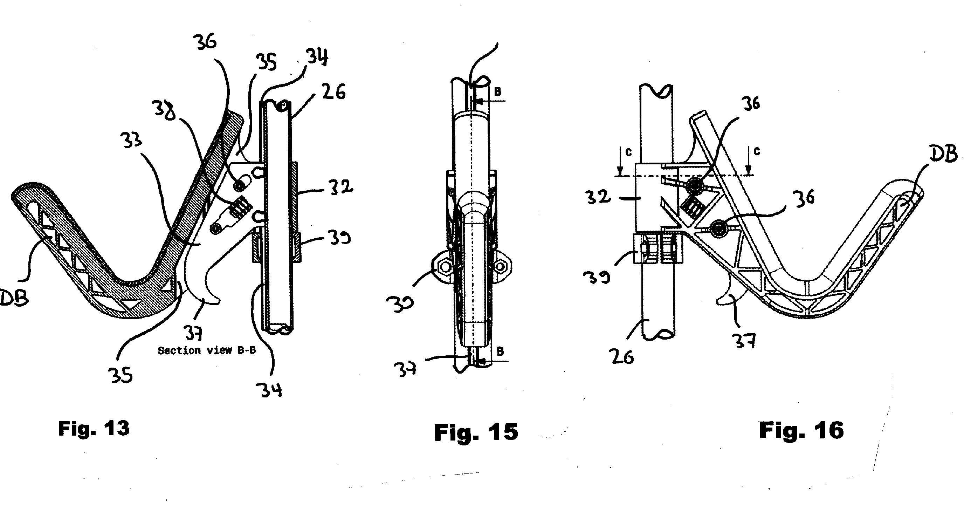

Die Figur 13 zeigt den Haken gemäß Figur 12 in einer vertikalen Ebene geschnitten.

Die Figur 14 zeigt den Haken gemäß Figur 12 in einer horizontalen Ebene geschnitten.

Die Figur 15 zeigt eine frontale Ansicht des Hakens gemäß Figur 12.

Die Figur 16 zeigt eine Ansicht des Hakens gemäß Figur 12 schräg von der Seite.

**ERSTES AUSFÜHRUNGSBEISPIEL**

ALLGEMEINES

Vorwegzuschicken ist, dass hier die Begriffe kopfseitig, fußseitig, vertikal und horizontal sowie Hochachse des Trägers und dergleichen auf den Zustand bezogen werden, in dem der Rucksack bestimmungsgemäß auf dem Rücken des Trägers getragen wird.

GRUNDSÄTZLICHER AUFBAU

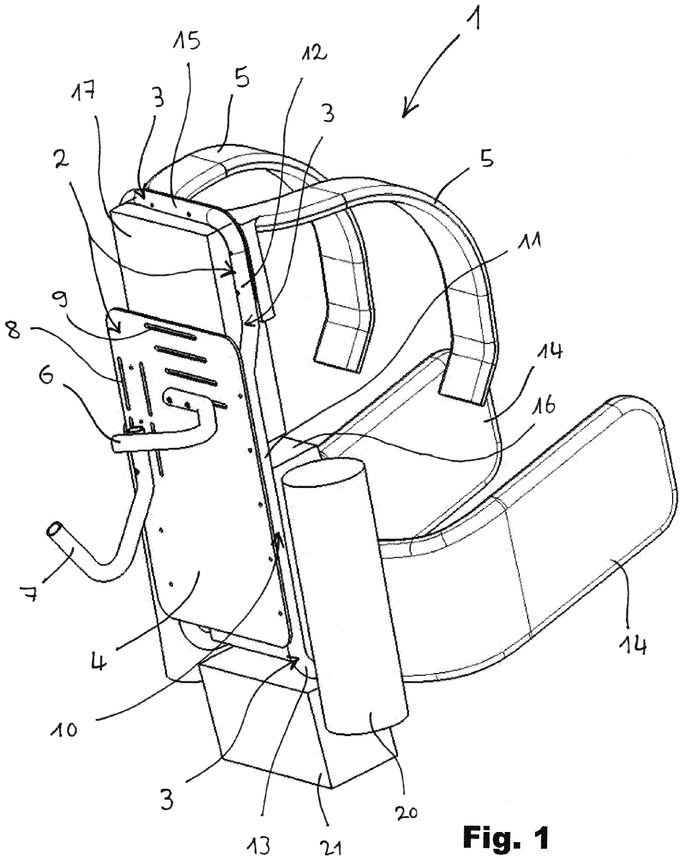

Den besten Überblick über das erfindungsgemäße Rucksacktragesystem zum freihändigen Rückentransport eines Fahrrades gewährt die Figur 1. Freihändig heißt hier, dass das Fahrrad auf dem Rücken getragen werden kann, ohne dass der Träger eine Hand einsetzen muss, um das Fahrrad in seiner Position auf dem Rücken zu halten. Vielmehr ist das Fahrrad so an dem Rucksacktragesystem befestigt, dass es beim Tragen von allein in seiner bestimmungsgemäßen Position auf dem Rücken bleibt. Das gilt auch dann, wenn das Tragesystem bevorzugt so ausgelegt ist, dass das Fahrrad nur eingehängt ist und mit einem Griff ausgehängt werden kann, ohne dass irgendein Verschluss oder irgendeine Schnalle gelöst werden muss.

Gut zu erkennen ist hier das Gestell 2, das im konkreten Fall aus dem Stab- bzw. Rohrrahmen 3 und der Rückenplatte 4 besteht. Schon an dieser Stelle sei gesagt, dass die Rückenplatte 4 aus den später noch näher zu erläuternden Gründen besonders günstig ist. Im Einzelfall könnte sie aber auch durch zusätzliche Abschnitte an dem Stab- bzw. Rohrrahmen 3 selbst ersetzt werden - etwa durch in horizontaler und/oder vertikaler Richtung verlaufende, hier nicht figürlich dargestellte Stege zwischen den Seitenteilen des Stab- bzw. Rohrrahmens 3, die eine entsprechende Positionierung und ggf. Einstellung der Haken erlauben.

An dem Stab- bzw. Rohrrahmen 3 sind Schulterträger 5 angebracht. Idealerweise sind die Schulterträger 5 höhenverstellbar an dem Stab- bzw. Rohrrahmen 3 befestigt, um den Rucksack an verschiedene Körpergrößen anpassen zu können. Das kann dadurch geschehen, dass der Stab- bzw. Rohrrahmen 3 flötenartig in unterschiedlicher Höhe angeordnete Befestigungslöcher besitzt. Mithilfe der Schulterträger 5 kann der Stab- bzw. Rohrrahmen 3 nach Art eines Rucksacks auf dem Rücken getragen werden.

Im Regelfall ist auch ein Hüftgurt 14 vorgesehen. Der Hüftgurt ist so positioniert, dass er den überwiegenden Teil und idealerweise mindestens 2/3 der Traglast auf den Hüftbereich des Trägers oder der Trägerin überträgt.

DIE BEFESTIGUNG DES ZU TRAGENDEN FAHRRADES

Das im Rahmen dieses Ausführungsbeispiels beschriebene Rucksacktragesystem zeichnet sich durch seine besonders geschickte Art, das Fahrrad tragefertig zu befestigen, aus.

Zum Einhängen des Fahrrades an dem Rucksacktragesystem dienen hier zumindest und im Idealfall nur ein erster Haken 6 und ein zweiter Haken 7. Die Haken sind vorzugsweise so gestaltet und positioniert, dass das zu tragende Fahrrad zum Tragefertigmachen lediglich in sie eingehängt werden muss. Es ist nicht erforderlich, das Fahrrad zusätzlich mit solchen Schnüren anzubinden oder zusätzlich mit solchen Schnallen bzw. Klettverschlüssen festzusetzen, die daran beteiligt sind, die in vertikaler Richtung wirkende Gewichtskraft des Fahrrades abzufangen.

Der Haken 7 ist in sich starr und vorzugsweise als Ganzer starr an dem Gestell 2 befestigt. Sinngemäß Gleiches gilt für den Haken 6, es sei denn, dieser ist ein "Rasthaken". Bei einem solchen Rasthaken ist mindestens ein Schenkel federnd beweglich an der starr festgelegten Hakenbasis befestigt, um den Haken 7 formschlüssig auf das Unterrohr des Fahrradrahmens aufrasten zu können - ähnlich einer Klemmbefestigung zum Einspreizen des Stiels eines Besens, der an der Wand der Besenkammer gehalten werden soll. Eine solche Rastbefestigung ist besonders günstig, weil sie auch bei extremen Bewegungen verhindert, dass sich das Fahrrad unbeabsichtigt aus den Haken herausdreht.

Optional können ein Haken oder beide Haken 6, 7 auch mit einer zusätzlichen Schließe, z. B. nach Art einer Skistiefelschnalle oder einer Elastomer- bzw. Gummischließe (wie sie z. B. als Zusatzverschluss für die Motorhauben von Rallye-Fahrzeugen dienen), versehen sein, um den in den Haken eingehängten Rahmenteil des Fahrrades zusätzlich formschlüssig gegen ein Herausrutschen zu sichern.

Unbeschadet der beiden letztgenannten Optionen gilt, dass die Rasthaken als solche ihre Anordnung und Ausrichtung auch unter Last beibehalten, zumindest im Wesentlichen. Es treten nur die auch an starren Körpern unter Last unvermeidlichen elastischen Verformungen im Millimeter- bzw. Submillimeterbereich auf. Die Haken bestehen idealerweise aus Aluminium oder Carbon. Sie können unabhängig davon bei Bedarf hohl sein, um Gewicht zu sparen.

Diese beiden Haken weisen eine besondere Anordnung auf. Wie man sieht, sind die beiden Haken 6 und 7, entlang der Hochachse des Trägers gesehen, in unterschiedlicher Höhe angebracht. Zugleich sind die beiden Haken 6 und 7 nicht untereinander angebracht, sondern, in horizontaler Richtung gesehen, voneinander beanstandet positioniert.

Der Haken 6 bildet hier den oberen Haken, während der Haken 7 den unteren Haken bildet.

Der obere Haken 6 ist vorzugsweise mittig oder im Wesentlichen auf der vertikalen Mittellinie M zwischen den beiden Schulterträgern 5 angebracht, letzterenfalls mit einer Lagetoleranz von +/- 35 mm. Idealerweise ist seine Position in horizontaler Richtung einstellbar, d. h. der Haken kann in unterschiedlichen Positionen festgesetzt werden, um die Lage des Schwerpunkts des zu tragenden Fahrrades einstellen zu können. Demgegenüber ist der untere Haken 7 vorzugsweise außermittig angebracht. Er hält dann von der vertikalen Mittellinie zwischen den beiden Schulterträgern 5 einen Abstand von mindestens 90 mm ein.

Der obere Haken 6 ist vorzugsweise in einer Höhe angebracht, die im Bereich der Schulterblätter des Trägers liegt, zweckmäßigerweise mit einer Toleranz von +/- 50 mm. Der untere Haken 7 ist in etwa auf der Höhe der Rückenmitte angebracht, zweckmäßigerweise mit der gleichen Toleranz, wie zuvor für den oberen Haken genannt. Der untere Haken ist vorzugsweise so positioniert, dass sich - beispielsweise bei einem 160 cm großen Mann und einem MTB der Größe S und 29er Laufradgröße - noch min. 20-30 cm Abstand zwischen Boden und Hinterrad einstellen, so dass der Träger beim Bergabgehen nicht durch ein Aufsetzen des Fahrrades auf den Untergrund behindert wird.

Idealerweise sind die beiden Schenkel, die den unteren Haken 7 bilden, so orientiert, dass sie in einer vollständig oder zumindest im Wesentlichen vertikalen Ebene (bzw. Ebenen-Schar) verlaufen. Der Haken 7 ist nach oben offen, so dass das Fahrrad von oben her in ihn eingehängt wird. Die beiden Schenkel, die den oberen Haken 6 bilden, spannen eine Ebene auf, die quer und vorzugsweise in einem Winkel von etwa 90° zu der Ebene angeordnet ist, in der sich die beiden Schenkel des Hakens 6 befinden. Der Haken 6 ist zu der dem Haken 7 zugewandten Seite hin offen.

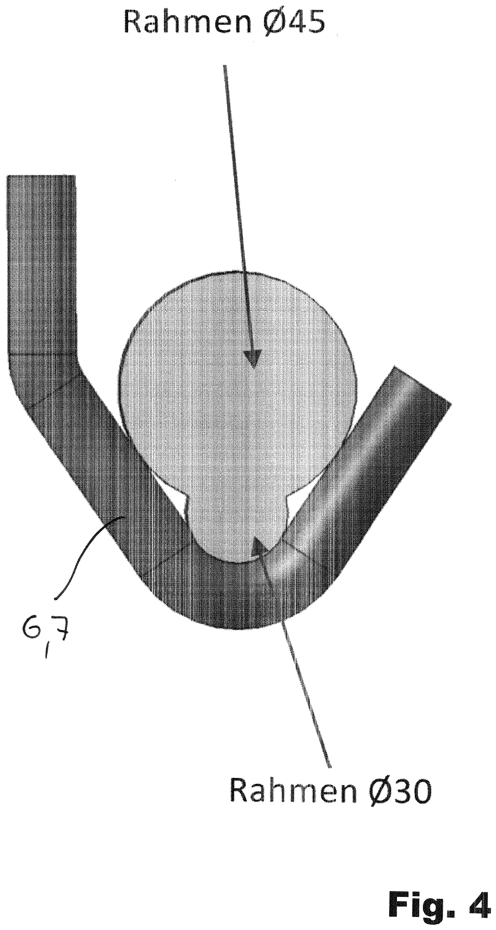

Die Schenkel mindestens eines, besser beider Haken können V-förmig oder U-förmig oder notfalls auch entsprechend eckig als Doppel-L-Profil ausgebildet sein. Idealerweise sind sie V-förmig gestaltet, so, wie von Figur 4 illustriert. Dann haben sie die Fähigkeit, ein Rahmenteil des Fahrrades klapperfrei zwischen sich einzuklemmen. Die V-förmigen Schenkel sind relativ zueinander idealerweise so geneigt, dass Rahmenrohre mit einem Außendurchmesser zwischen 28 mm und 55 mm zwischen den beiden Schenkeln eines Hakens klapperfrei eingeklemmt werden können. Besonders günstig ist es, wenn die Schenkel einen gegenüber einer blanken oder lackierten Metalloberfläche reibungserhöhenden Überzug aufweisen, etwa aus Gummi, Kautschuk, besonders bevorzugt Neopren, oder einem Elastomer, insbesondere einem thermoplastischen Elastomer. Dieser Überzug kann nach Art einer Farbe aufgebracht sein oder beispielsweise als fest aufgezogener oder aufgeschrumpfter Schlauch aus einem entsprechenden Material.

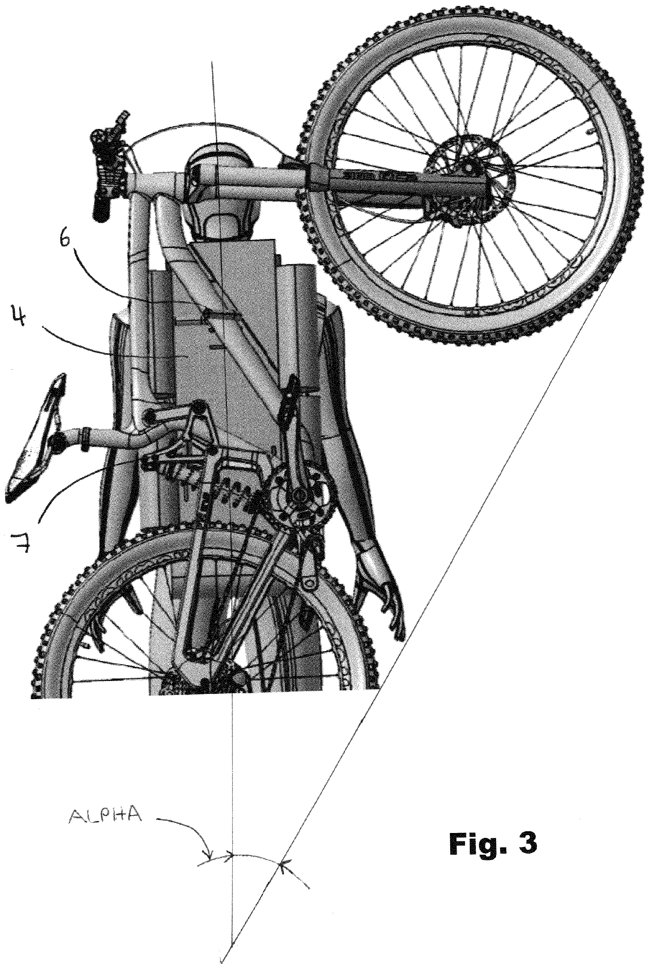

Wie ein zu transportierendes Fahrrad an dem Rucksacktragesystem eingehängt wird, um dann nach dem Schultern des Rucksacktragesystems freihändig getragen zu werden, ist am besten anhand der Figur 3 zu erkennen. Wie man sieht, wird das Fahrrad vorzugsweise hochkant getragen oder jedenfalls so, dass seine sogenannte Geradeaus-Fahrtrichtung, die durch seine Räder vorgegeben wird, einen spitzen Winkel ALPHA von nicht mehr als 37,5° und besser von nicht mehr als 30° zur Vertikalen einnimmt. Letzteres ist vor allem deswegen wichtig, da das erfindungsgemäße Rucksacktragesystem vor allen Dingen im alpinen Bereich zum Tragen von Mountainbikes verwendet wird. Gerade bei einem solchen Einsatz kann das Fahrrad aus Sicherheits- und Platzgründen nicht quer getragen werden. Dementsprechend sind die beiden Haken 6 und 7 angeordnet.

Der untere Haken 7 wird so verwendet bzw. kommt so zum Einsatz, dass in ihn bei konventionellen Diamant-Rahmen das die Sattelstütze führende Rahmenrohr eingehängt wird. Bei vollgefederten Fahrrädern wird meist die Hinterradschwinge in den unteren Haken 7 eingehängt, jedenfalls sofern sie einen Abschnitt aufweist, der parallel zur Richtung zur Sattelstütze verläuft. Der Haken 7 ist so positioniert und wird so eingehängt, dass das Lot des Fahrradschwerpunkts nicht durch den Haken 7 geht, sondern durch den Bereich, der, in horizontaler Richtung gesehen, zwischen dem Haken 6 und dem Haken 7 liegt.

Dadurch, dass der untere Haken 7 in der oben beschriebenen Art und Weise angeordnet ist, ist er in der Lage, mehr als 2/3 und idealerweise sogar im Wesentlichen die gesamte in vertikaler Richtung wirkende Gewichtskraft des Fahrrades aufzunehmen. Durch die außermittige Anordnung des Hakens 7 hat das Fahrrad die Tendenz, sich so um den Haken 7 zu drehen, dass es in den Haken 6 hineinschwenkt. Auf diese Art und Weise legt sich das Unterrohr des Fahrrades von allein in den Haken 6 ein. Dies gerade auch deshalb, weil der Haken 6 schräg oder rechtwinklig zu dem Haken 6 orientiert ist, vgl. Figur 1. Er empfängt daher das schräg nach oben ragende Unterrohr mit seiner offenen Haken-Seite. Das Entscheidende ist, dass das Fahrrad permanent die Tendenz hat, sich mit dem Unterrohr in den Haken 7 einzuschieben, selbst wenn der Träger schwankt.

Hierdurch ergibt sich eine ausgesprochen schnelle und dabei sehr sichere Befestigung. Das Fahrrad wird in den unteren Haken 7 eingehängt und dann in den oberen Haken 6 hineingedreht. Das Abnehmen erfolgt in umgekehrter Reihenfolge. Das Ein- und Aushängen erfolgt also durch eine kombinierte Translations- und Drehbewegung. Dies ist für den Einsatz in den Bergen von größtem Interesse, denn auf anspruchsvollen Mountainbike-Trails wechseln sich Fahrstrecken und Tragestrecken oft schnell ab, so dass es von essentieller Bedeutung ist, das Fahrrad durch bloßes Ein- und Wiederaushängen schnell auf- und abladen zu können.

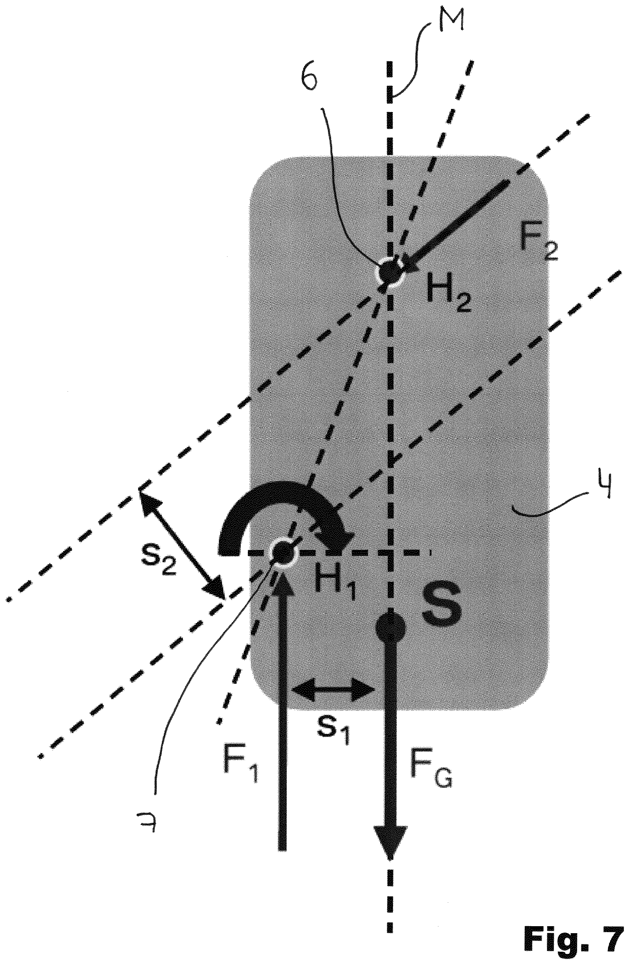

Warum die Befestigung sozusagen selbsthaltend ist, das sieht man am besten anhand der Figur 7, die schematisch die Verhältnisse wiedergibt, ggf. in Verbindung mit Figur 3. Gut zu erkennen anhand der Figur 7 ist die Rückenplatte, auf die gleich noch näher einzugehen ist. Gut zu erkennen sind auch der obere Haken 6 und der untere Haken 7 sowie die gedachte Mittellinie M zwischen den beiden Schulterträgern 5. Der obere Haken 6 ist hier genau auf der Mittellinie M positioniert. Der untere Haken 7 ist hier außermittig auf der linken Seite angeordnet. Das Fahrrad wird vorzugsweise so in den unteren Haken 7 eingehängt, dass sein Schwerpunkt in der Transportlage des Fahrrades auf der Mittellinie M zu liegen kommt. Dadurch übt das Fahrrad tendenziell Bewegungen im Uhrzeigersinn aus und sein Unterrohr wird, wie geschildert, von allein in den oberen Haken 7 hinein gedreht. Vernachlässigt man in erster Näherung die Reibungskräfte, dann nimmt der untere Haken 7 die vertikale Gewichtskraft FG des Fahrrades auf, während an dem oberen Haken in Richtung senkrecht zur Oberfläche des Unterrohrs, auf das er einwirkt, eine überwiegend in horizontaler Richtung wirkende Kraft ansteht. Bemerkenswert ist, dass an dem oberen Haken 6 eine in vertikaler Richtung wirkende Kraftkomponente auftreten kann, die einem unbeabsichtigten Aushängen des Fahrrades aus dem unteren Haken 7 entgegenwirkt. Ein solches unbeabsichtigtes Aushängen kann drohen, wenn das Hinterrad des Fahrrades beim Abstieg des Trägers über eine Felsstufe kurzzeitig auf dem Boden aufsetzt. Diese Aushängesicherung lässt sich noch deutlich verbessern, wenn der obere Haken mit einem reibungserhöhenden Überzug versehen wird und/oder der Haken mit der oben erörterten, besonders klemmstarken V-Form.

Es stellt sich folgendes Drehmomentengleichgewicht ein:

$$\sum MH1 : Fg * S1 - F2 * S2 = 0$$

Gleichzeitig herrscht folgendes Kräftegleichgewicht:

$$Fg * S1 = F2 * S2$$

Damit liegt das Fahrrad sicher in den Haltern.

## DIE RÜCKENPLATTE

Die schon mehrfach angesprochene Rückenplatte 4 ist zwischen dem Fahrrad und der unmittelbar am Rücken des Trägers anliegenden Polsterung angebracht. Sie bildet einen Schild zum Schutz der Wirbelsäule des Trägers. Bei Stürzen nach hinten, etwa bei einem Wegrutschen während eines steilen Abstiegs über losen Untergrund, verhindert die Rückenplatte 4, dass sich harte Rahmenteile oder die Haken 6 und 7 in den Rücken bohren und verteilt die auf den Rücken einwirkende Belastung flächig. Zu diesem Zweck ist die Rückenplatte vorzugsweise so breit ausgebildet, dass sie die Wirbelsäule des Trägers auf überwiegender Länge abdeckt, oder sogar auf ganzer Länge. Die Breite der Rückenplatte entspricht zweckmäßigerweise in etwa der Schulterbreite bzw. dem Abstand der beiden Schulterträger 5. Die Rückenplatte 4 besteht entweder aus Blech, vorzugsweise aus Aluminiumblech, aus Kunststoff, aus einer Holzplatte, typischerweise einer wasserfest verleimten Schichtholzplatte, oder aus Carbon. Sie hat im Regelfall Abmessungen von mindestens 200 mm in horizontaler Richtung und mindestens 350 mm in vertikaler Richtung, vorzugsweise bei einer Dicke zwischen 0,3 mm und 5 mm.

Vorzugsweise bietet die Rückenplatte 4 zugleich eine Basis zur starren Festlegung der Haken 6 und 7, idealerweise mittels einer werkzeuglos zu bedienenden Rast- oder Schraubverbindung. Die Rückenplatte und/oder die Haken sind so ausgestaltet, dass die Haken 6 und 7 in unterschiedlichen Alternativpositionen an der Rückenplatte festgelegt werden können. Auf diese Art und Weise kann das erfindungsgemäße Rucksacktragesystem an die körperliche Konstitution des Trägers und die Größe und Gewichtsverteilung des zu transportierenden Fahrrades angepasst werden.

Wie man sieht, ist die Rückenplatte mit unterschiedlichen Montageöffnungen 8 für den ersten Haken 6 ausgerüstet. Diese Montageöffnungen 8 sind vorzugsweise jeweils als Langlöcher ausgeführt, die sich bevorzugt in horizontaler Richtung erstrecken. Auf diese Art und Weise kann der erste Haken 6 in unterschiedlichen Höhen montiert werden. Zugleich kann seine Ausrichtung relativ zur Mittellinie M zwischen den Schulterträgern 5 eingestellt werden.

Zugleich ist die Rückenplatte 4 mit unterschiedlichen Montageöffnungen 9 für den zweiten Haken 7 ausgerüstet. Auch diese sind vorzugsweise jeweils als Langlöcher ausgeführt, die sich idealerweise in vertikaler Richtung erstrecken. Auf diese Art und Weise kann der zweite Haken 7 in unterschiedlichen Abständen zur Mittellinie M zwischen den Schulterträgern 5 befestigt und in der Höhe verstellt werden.

## DER STAB- BZW. ROHRRAHMEN

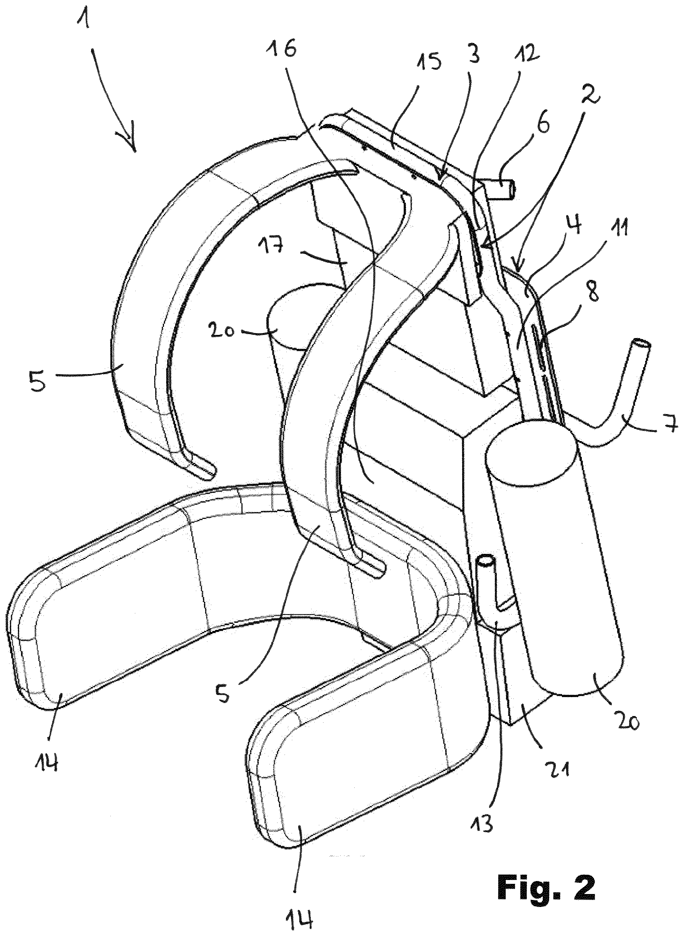

An dieser Stelle ist erneut auf die Figuren 1 und 2 zu verweisen.

Vorzugsweise auf ihrer dem Rücken des Trägers direkt zugewandten Seite ist an der Rückenplatte 4 ein Stab- bzw. Rohrrahmen 3 befestigt. Wie man sieht, weist der Stab-bzw. Rohrrahmen 3 zwei Stab-oder Rohrabschnitte 10 auf. Jeder dieser Stab-Rohrabschnitte 10 besitzt einen Mittenabschnitt 11. Der Mittenabschnitt 11 liegt gegen die Rückenplatte 4 an und ist an dieser befestigt, vorzugsweise mit ihr verschraubt, vernietet oder verschweißt.

Zur Kopfseite hin schließt sich an diesen Mittenabschnitt 11 ein erster Randabschnitt 12 an. Dieser ist zumindest abschnittsweise so gekrümmt, dass er einen Befestigungsbereich für einen Schulterträger 5 bildet, der näher am Körper des Trägers liegt als der besagte Mittenabschnitt 11. Idealerweise schließt sich zur Hüftseite an den Mittenabschnitt 11 ein zweiter Randabschnitt 13 an. Dieser ist zumindest abschnittsweise so gekrümmt, dass er einen Befestigungsbereich für einen Hüftgurt 14 bildet, der näher am Körper des Trägers liegt als der besagte Mittenabschnitt 11. Zu diesem Zweck ist es besonders günstig, wenn der zweite Randabschnitt 13 einen Haken ausformt, wie er anhand der Figur 4 zu erkennen ist, beispielsweise in Gestalt eines nach oben offenen Hakens.

Wie man gut anhand der Figur 1 erkennen kann, sind die beiden ersten Randabschnitte 12 der beiden Stab- oder Rohrabschnitte 10 miteinander durch einen Verbindungsabschnitt 15 verbunden.

Idealerweise ist der Stab- bzw. Rohrrahmen 3 im Umfang seiner vorstehend beschriebenen Abschnitte als einstückiges Metallbiegeteil ausgeführt. Abgesehen von dem Verbindungsabschnitt 15 kann sich eine weitere Verbindung der beiden Stab- oder Rohrabschnitte 10 in horizontaler Richtung miteinander erübrigen, da die Stabilisierung in horizontaler Richtung durch die Rückenplatte 4 übernommen wird.

Dadurch, dass die Befestigungspunkte für die Schulterträger 5 und den Hüftgurt 14 gegenüber der Rückenplatte 4 in Richtung hin zum Körper des Trägers verlegt sind, gewinnen die Rückenplatte und das auf ihr befestigte Fahrrad Abstand vom Körper des Trägers. Dies ist besonders günstig, da das hochkant getragene Fahrrad mit seinem Hinterrad bis in den Bereich der Waden des Trägers reicht. Es muss daher genügend Abstand zwischen den Waden des Trägers und dem Fahrrad geschaffen werden, damit der Träger weitgehend unbehindert gehen und damit auch weitere Tragestrecken bequem zurücklegen kann.

## DER ABSTANDHALTER

Aus diesem Grund ist jedenfalls zwischen dem Hüftgurt und der Rückenplatte ein Abstandhalter 16 vorgesehen, den man am besten anhand der Figur 2 erkennt. Dessen Dicke ist im Regelfall so gewählt, dass die Rückenplatte mindestens 7,5 cm, besser mindestens 10 cm und idealerweise mindestens 14 cm vom Rücken des Trägers auf Abstand gehalten wird.

Dieser Abstandhalter 16 kann ein einfaches Polster sein, etwa ein Schaumstoffteil.

Wesentlich besser ist es aber, den Platz zwischen dem Hüftgurt und der Rückenplatte auszunutzen und den Abstandhalter 16 als vorzugsweise formstabilen Hohlbehälter 17 zur Aufnahme von Utensilien auszuführen. Um den Hohlbehälter geschickt beladen zu können, hat er vorzugsweise zumindest eine seitliche Entnahme- und Beschickungsöffnung. Formstabil bedeutet hier, dass der Hohlbehälter eine gewisse Elastizität haben darf, wie sie beispielsweise einer Kunststoff-Box zu eigen ist. Er ist dann unter den im Tragebetrieb auftretenden Kräften nicht mehr als 10 mm in horizontaler Richtung zusammendrückbar und insbesondere nicht knautschbar. Ein formstabiler Hohlbehälter hat hier den Vorteil, dass er auf seiner zum Rücken des Trägers hinweisenden Oberfläche mit einer Polsterung versehen werden kann, die sich in definierter Art und Weise, unabhängig vom Inhalt des Hohlbehälters, an den Rücken des Trägers anlegt oder den Hüftgurt auf seiner dem Träger abgewandten Seite zusätzlich aufpolstert. Selbstverständlich kann der Abstandhalter 16 stattdessen auch als knautschbare Tasche ausgeführt sein, nämlich insbesondere dann, wenn der Hüftgurt 14 stramm zwischen den zweiten Randabschnitten 13 aufgespannt ist und dann die zwischen ihm und der Rückenplatte 4 liegende Tasche beim Tragen nicht mit Druck gegen den Rücken des Trägers anliegt.

Oberhalb des Abstandhalters 16, d. h. im nach oben verlängerten Bereich zwischen dem Hüftgurt und der Rückenplatte 4, kann mindestens eine weitere Tasche oder mindestens ein formstabiler Hohlbehälter 17 auf der dem Träger unmittelbar zugewandten Seite der Rückenplatte 4 angeordnet sein. Die Befestigung erfolgt am Stab- oder Rohrrahmen 3 und/oder direkt an der Rückenplatte. Es kann sinnvoll sein, die Tasche oder den mindestens einen formstabilen Hohlbehälter auf seiner zum Rücken des Trägers hinweisenden Oberfläche mit einer Polsterung zu versehen, wie schon zuvor für den Abstandhalter beschrieben.

## DIE OPTIONAL ZUM SYSTEM GEHÖRENDEN WEITEREN BESTANDTEILE

Auch wenn das in den Figuren nicht explizit dargestellt ist, ist dennoch festzuhalten, dass die Rückenplatte oder der Rohrrahmen zusätzliche Verankerungspunkte für optional an ihr zu befestigende Taschen aufweisen kann. Die zusätzlichen Verankerungspunkte sind bevorzugt als Durchbrüche ausgeführt, durch die z. B. der Riemen eines Klettverschlusses oder ein mittels einer Schnalle zu schließender Riemen hindurchgeführt werden kann.

Idealerweise umfasst das Rucksacktragesystem mindestens eine, vorzugsweise zwei Seitentaschen 20, die idealerweise zur stehenden Aufnahme einer Trinkflasche ausgestaltet sind. Die Seitentaschen 20 haben vorzugsweise eine zylindrische Gestalt zur lagegenauen Aufnahme je einer Trinkflasche in stehender Position. Diese mindestens eine Seitentasche 20 kann jeweils im Bereich einer vertikal verlaufenden Seitenkante der Rückenplatte 4 befestigt sein, vorzugsweise unmittelbar an dieser und/oder an dem jeweiligen Stab- oder Rohrabschnitt 10 des Stab- bzw. Rohrrahmens 3.

Bevorzugt weist das Rucksacktragesystem mindestens eine Gesäßtasche 21 auf. Diese ist unterhalb des Abstandhalters 16 zwischen dem Hüftgurt 14 und der Rückenplatte 4 angeordnet. Sie ist vorzugsweise unmittelbar an dem zweiten Randabschnitt 13 der besagten Stab- oder Rohrabschnitte 10 angebracht. Das gilt insbesondere, wenn diese jeweils als Haken mit einem vorzugsweise horizontal verlaufenden Abschnitt ausgebildet sind, an denen die Gesäßtasche vorzugsweise pendelfrei aufgehängt werden kann.

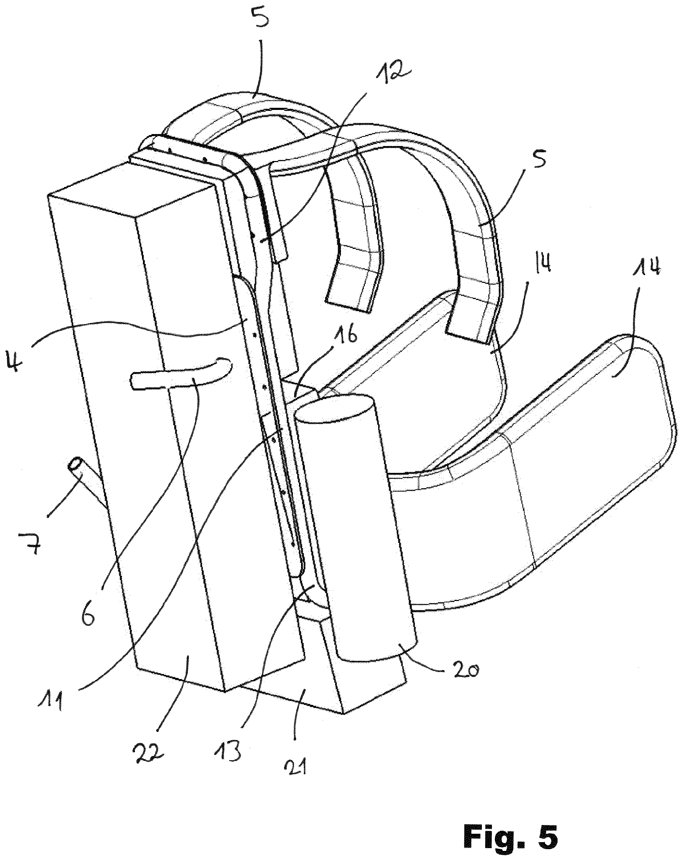

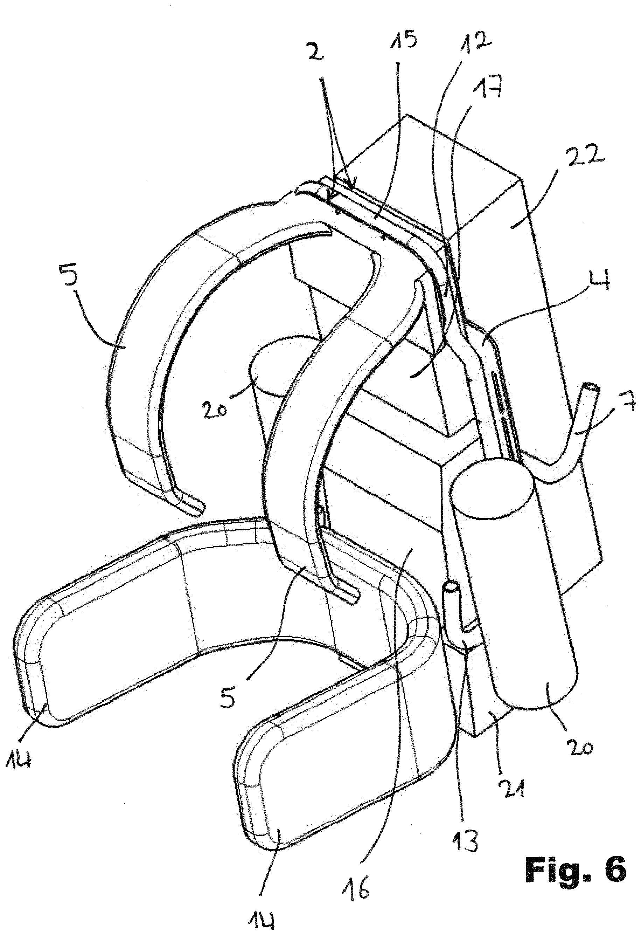

Besonders günstig ist es, wenn das Rucksacktragesystem mindestens eine Haupttasche 22 umfasst, vgl. Figuren 5 und 6. Die Haupttasche 22 und die Rückenplatte 4 bzw. die Haken 6, 7 sind vorzugsweise so gestaltet, dass die Haupttasche 22 werkzeuglos auf der vom Körper des Trägers abgewandten Seite der Rückenplatte 4 befestigt und von dort auch wieder werkzeuglos gelöst werden kann. Vorzugsweise weist die Haupttasche eigene Schulterträger auf, so dass sie während des Fahrradtransports vom Träger als Rucksack vor der Brust getragen werden kann.

Besonders günstig ist es, wenn die Haupttasche mindestens eine und besserer mehrere Aussparungen aufweist, in die ein Haken 6; 7 zur Aufnahme des Fahrrades eingeschoben werden kann.

Im Optimalfall ist die Haupttasche so gestaltet, dass sie allein durch oder unter Beteiligung eines Einhängens, Einklickens und/oder Einspreizens in die Haken 6, 7 werkzeuglos an der Rückenplatte befestigt werden kann und von dort auch werkzeuglos wieder abgenommen werden kann.

Besonders günstig ist es, wenn das Rucksacktragesystem ein Blockierelement für das Vorderrad umfasst, welches das Vorderrad im Wesentlichen in Geradeausfahrposition festhält. Das Blockierelement kann ein Riemen oder Seil mit einem Schnellverschluss oder einem Clickverschluss sein, das straff um das Unterrohr und quer um die Felge des Vorderrades gelegt wird und letzteres dann gefangen hält. Besonders günstig ist dabei, wenn das Blockierelement am Gestell des Rucksacktragesystems unverlierbar befestigt, z. B. angebunden, ist.

## ZWEITES AUSFÜHRUNGSBEISPIEL

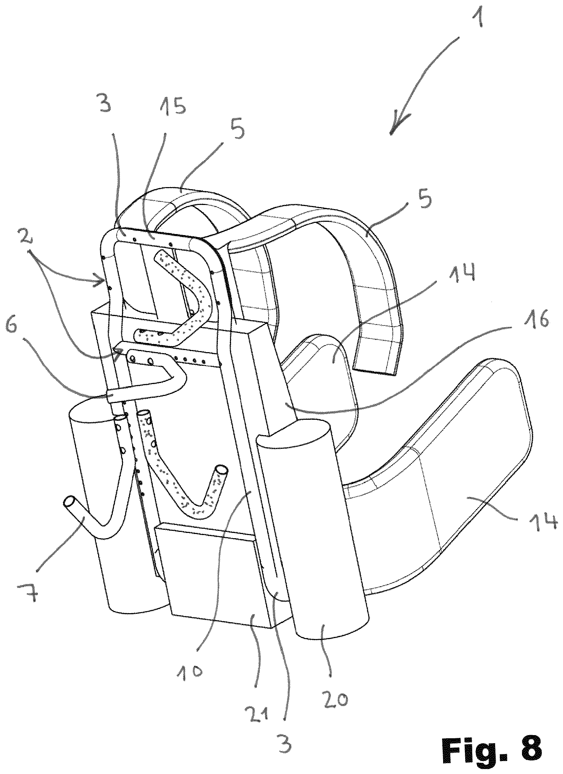

Die Fig. 8 zeigt ein zweites Ausführungsbeispiel der Erfindung.

Dessen Aufbau entspricht dem des ersten Ausführungsbeispiels, weshalb alles, was für das erste Ausführungsbeispiel erläutert wurde, auch für das zweite Ausführungsbeispiel gilt.

Der einzige Unterschied liegt darin, dass das zweite Ausführungsbeispiel aus Gewichtsgründen auf die schützende Rückenplatte verzichtet. Stattdessen weist das Gestell 2 mindestens eine zusätzliche Horizontalstrebe 23 auf. Idealerweise ist an dieser bzw. einer dieser zusätzlichen Horizontalstreben 23 der erste Haken 6 befestigt. Um die Position des ersten Hakens 6 einstellen zu können, ist die zusätzliche Horizontalstrebe mit einem entlang ihrer Längsachse verlaufenden Satz aus Löchern bzw. sich an der Längsachse gegenüberliegenden Paaren aus Löchern versehen, mittels derer der erste Haken 6 in unterschiedlichen Positionen mit der zusätzlichen Horizontalstrebe 23 verschraubt werden kann.

Dabei ist zusätzlich mindestens ein Loch bzw. Lochpaar vorgesehen, dessen bzw. deren gemeinsame Achse im Wesentlichen senkrecht zu der oder den gemeinsamen Achsen der anderen Löcher bzw. Lochpaare verläuft. Dadurch kann der erste Haken in einer "eingeklappten" Position am Gestell 2 festgelegt werden, in der er z. B. in der Ebene liegt, die die ihn unmittelbar umgebenden Rohre/Teile des Gestells 2 aufspannen. In Fig. 8 ist die Darstellung des Hakens 6, in der sich dieser in seiner "eingeklappten" Position befindet, durch die Punktierung zeichnerisch hervorgehoben.

Wie man sieht, ist der zweite Haken 7 vorzugsweise in sinngemäß gleicher Weise an einem - allerdings im Regelfall vertikal verlaufenden - Rohr/Teil des Gestells 2 befestigt, so, dass seine Position in vertikaler Richtung verstellbar ist und ebenfalls so, dass er in der zuvor für den ersten Haken 6 beschriebenen Art und Weise in "eingeklappter" Position am Gestell 2 befestigt werden kann.

In Fig. 8 ist die Darstellung des Hakens 7, in der sich dieser in seiner "eingeklappten" Position befindet, durch die Punktierung zeichnerisch hervorgehoben.

## DRITTES AUSFÜHRUNGSBEISPIEL

Die Figuren 9 bis 16 zeigen ein drittes Ausführungsbeispiel der Erfindung.

Dieses Ausführungsbeispiel entspricht in Bezug auf die Positionierung der Haken 6, 7 und die Art und Weise, das Fahrrad zu tragen, sowie in Bezug auf diverse andere Aspekte den vorhergehenden Ausführungsbeispielen. Daher gilt das dort Gesagte auch für dieses Ausführungsbeispiel.

Dieses Ausführungsbeispiel unterscheidet sich insoweit von den vorangegangenen Ausführungsbeispielen, dass hier ein Soft-Rucksack verwendet wird, der im normalen Rucksackbetrieb keinen Rahmen, oder nicht den vollständigen Rahmen enthält und daher besonders bequem zu tragen ist.

Typischerweise enthält er aber eine - gegebenenfalls auch herausnehmbare - als Schild dienende Verstärkungsplatte aus Kunststoff, die verhindern soll, dass feste Komponenten eines getragenen Fahrrades ungehindert bis auf den Rücken des Trägers durchschlagen können, auch im Fall ungeschickter Bewegungen oder eventueller Stürze.

Dieser Soft-Rucksack zeichnet sich dadurch aus, dass er spezielle Verbinder umfasst, auf die gleich noch näher einzugehen ist.

Sobald Bedarf besteht, ein Fahrrad zu tragen, wird der von Figur 9 gezeigte Hilfsrahmen 24 über die speziellen Verbinder an dem Rucksack befestigt.

Der Hilfsrahmen 24 zeichnet sich dadurch aus, dass er bevorzugt aus vier Rohren 26 besteht. Idealerweise sind diese vier Rohre 26 untereinander mittels Eckverbindern 25 miteinander verbunden. Die Eckverbinder sind meist aus Kunststoff. Jeder der Eckverbinder besitzt idealerweise zwei Muffen, die im Winkel von 90° zueinander positioniert sind. In diese Muffen wird je ein Rohr 26 eingeschoben und dort befestigt. Die Befestigung erfolgt mittels entsprechender Pressung durch ein Untermaß der Muffen gegenüber dem Rohrdurchmesser reibschlüssig und/oder durch Kleben und/oder durch Verrastung.

Wie man am besten anhand der Figuren 10 und 11 sieht, ist der Rucksack mit örtlichen Verstärkungen ausgerüstet. An diesen sind Aufnahmepins 27 festgelegt, die typischerweise ein Pin-Außengewinde 28 aufweisen, mit dem sie durch die Rucksackhaut und die dortige Verstärkung hindurchgesteckt und an dem Rucksack festgeschraubt werden können. Diese Pins weisen eine Befestigungsnut 29 auf und ein Pin-Innengewinde 30. Zur Befestigung des hier zunächst interessierenden Hilfsrahmens 24 wird die Befestigungsnut 29 nicht gebraucht. Sie dient anderen Zwecken, die gleich noch erläutert werden. Stattdessen erfolgt die Befestigung des Hilfsrahmens 24 wie folgt:

Wie man gut anhand der Figur 10 sieht, wird jeweils ein Eckverbinder 25 auf einen Pin 27 aufgesetzt, sodass ein komplementärer Hohlraum des Eckverbinders 25 den Pin 27 aufnimmt.

Dann wird von der dem Rucksack abgewandten Seite des Eckverbinders her eine Rändelschraube 31 durch den Eckverbinder hindurchgeschoben und dann in das Pin-Innengewinde 30 eingeschraubt. Auf diese Art und Weise wird der Eckverbinder fest mit dem Pin 27 des Rucksacks verbunden. Sobald alle Verbindungen dieser Art hergestellt worden sind, an jeden Eckverbinder 27 eine, ist der Rucksack mit dem außen auf ihn aufgesetzten Hilfsrahmen 24 verbunden.

Wie eben schon angedeutet, besitzen die Pins 27 eine Multifunktionalität. Denn das Pin-Innengewinde 30 wird nur benötigt, wenn an dem Pin ein Zusatzelement besonders stabil befestigt werden soll, wie etwa der Hilfsrahmen 24. Falls an dem Pin nur leichtere Dinge befestigt werden sollen, wie etwa zusätzliche Flaschenhalter, Außentaschen, Schlafsackhalter und dergleichen, dann erfolgt das dadurch, dass ein entsprechendes, hier nicht näher gezeigtes Formschlusselement über den Pin 27 gestülpt wird, das dann mit seinem Riegel in die Nut 29 des Pins eingreift. Auf diese Art und Weise wird eine gewindefreie Schnellverbindung für Außentaschen und dergleichen geschaffen.

Der Hilfsrahmen ist seinerseits mit einem ersten Haken 6 und einem zweiten Haken 7 ausgerüstet, wie das bereits zuvor für das erfindungsgemäße System beschrieben worden ist, sodass das dort Gesagte auch hier gilt.

Die hier verwendeten speziellen Haken 6, 7, die übrigens in dieser Form auch für die anderen Ausführungsbeispiele verwendet werden können, zeichnen sich durch ihren besonders geschickten Mechanismus aus, der ein besonders einfaches Einklappen und bei Bedarf wieder Ausklappen des jeweiligen Hakens 6, 7 ermöglicht.

Die Haken sind idealerweise aus Kunststoff spritzgegossenen und zwar am besten so, dass sie eine zumindest jeweils im wesentlichen geschlossene Hakenoberseite und Hakenunterseite besitzen, die untereinander durch wechselweise schräg verlaufende Rippen Ri verbunden sind, so wie das am besten die Figur 12 zeigt. Wie man gut anhand der Fig. 14 sieht, erstrecken sich die Rippen über den längenmäßig überwiegenden Teil des Hakens hinweg oder zumindest über 40% der Länge des Hakens hinweg nicht durch den ganzen Haken hindurch, sondern enden an zwei mit ihren Breitseiten senkrecht zu den Breitseiten der Rippen verlaufenden Mittelwänden Mw. Die Mittelwände Mw bilden zwischen sich vorzugsweise Führungstaschen 35 aus, deren Zweck gleich noch näher erläutert wird. Im Bereich der Hakenspitze können sich die Rippen durch den ganzen Haken hindurch erstrecken, so dass von den Rippen mehrere Bereiche begrenzt werden, bei denen es sich um Durchbrüche DB handelt, die jeweils quer durch den gesamten Haken hindurchgehen, so dass dieser besonders leichtgewichtig wird.

Dort, wo noch hochwertigere Ausführungen verlangt werden, können diese Haken auch aus Metall gegossen sein, etwa aus Zinkdruckguss bestehen oder sogar aus Aluminium geschmiedet bzw. aus dem Vollen gefräst sein.

Die Haken weisen, wie man besten anhand der zugehörigen Schnittansicht der Figur 12 sieht, einen Rohrabschnitt 32 auf, der das Rohr am Umfang vollständig umgreift. Das Spiel des Rohrabschnitts 32 ist so gewählt, dass der Rohrabschnitt 32 auf dem Hilfsrahmen 24 transversal verschoben werden kann und auch gedreht werden kann, jedenfalls in entriegeltem Zustand.

Auf diese Art und Weise kann der gesamte Haken 7, den die Figur 12 zeigt, aus seiner von Figur 12 gezeigten Bereitschaftsposition in der durch den Drehpfeil PD angedeuteten Richtung in eine um 90° in den Gegenuhrzeigersinn geschwenkte Ruheposition verbracht werden.

Natürlich darf der Haken beim Tragen des Fahrrads nicht schwenken und auch nicht verrutschen. Um unbeabsichtigtes Schwenken zu verhindern, dient vorzugsweise eine in den Haken eingebaute, bewegliche Rastplatte 33 und eine Nut 34 in jedem oder zumindest jedem der für einen Haken vorgesehenen Rohre des Hilfsrahmens 24. In verriegeltem Zustand greift die Rastplatte 33 so in die Nut 34 des Rohres eines Hilfsrahmens ein, wie das die Figur 13 und die Figur 14 zeigen. Der Haken 6 kann dadurch gegenüber dem Rohr nicht gedreht werden.

An dieser Stelle ist auf die bereits oben angesprochene Führungstasche 35 zu sprechen zu kommen, die zwischen den Mittelwänden Mw ausgebildet ist. Denn die Rastplatte 33 ist in der Führungstasche 35 eines Hakens 6, 7 untergebracht. Wie man am besten anhand der Fig. 13 sieht, wird jede Führungstasche zu diesem Zweck von zwei Führungsschrauben bzw. Führungsstiften 36 durchgriffen. Mittels ihrer Langlöcher bzw. Führungsschlitze 37 ist die Rastplatte 33 translatorisch verschiebbar in der Führungstasche gehalten, vorzugsweise so, dass sich der überwiegende Teil der Führungsplatte 33 innerhalb der Führungstasche 35 befindet. Meist ragt die Führungsplatte 33 nur an zwei Stellen aus der Führungstasche 35 hervor. Nämlich dort, wo sie den idealerweise nach Art eines pistolenartigen Abzugs ausgebildeten Betätigungsansatz 37 bildet (vergleiche Figur 12) und mit dem Abschnitt, der zum Einrasten in die Nut 34 des jeweiligen Rohrs 26 bestimmt ist. Ebenfalls gut anhand der Figur 13 ist zu erkennen, dass die Führungsplatte von einer Feder 38, die vorzugsweise von einem Fenster der Führungskader aufgenommen wird und zwischen der Führungsplatte und dem Haken spreizend wirkt, in Richtung des Rohrs 26 gedrückt wird. Das bedeutet, dass die Rastplatte 33 in die Nut 34 einrastet, sobald der Haken in seine Gebrauchsposition geschwenkt worden ist, in der die Rastplatte 33 genau über der Nut 34 zu liegen kommt.

Das Verschieben des Rohres wird vorzugsweise mithilfe des Klemmrings 39 verhindert. Der Klemmring 39 ist so gestaltet, dass er unverrückbar auf dem jeweiligen Rohr 26 des Hilfsrahmens 24 festsetzt, sobald seine Klemmschraube voll angezogen ist. Auf die Art und Weise hindert der Klemmring den gegen ihn formschlüssig anlaufenden Haken 6, 7 an einer translatorischen Bewegung. Der Ordnung halber sei gesagt, dass einem Haken 6 bzw. 7 nicht nur ein Klemmring 39 zugeordnet sein kann. Stattdessen kann auch beidseitig des Hakens jeweils ein Klemmring 39 angeordnet sein, um den Haken in beide Richtungen an einer translatorischen Bewegung zu sperren. Alternativ ist auch eine Gestaltung denkbar, bei der ein Klemmring 39 in voll angezogenen Zustand das ihn durchgreifende Rohr 26 soweit ovalisiert, dass hierdurch ein Verrutschen des Hakens ausgeschlossen wird. Das hat den Vorteil, dass dann jeweils nur ein einziger Klemmring pro Haken vorgesehen werden muss. Das spart Material und verringert auch den Aufwand, der zum Festsetzen eines Hakens erforderlich ist.

Der Vollständigkeit halber ist noch anzumerken, dass es sich anbietet, die Fläche des Hakens, die bestimmungsgemäß mit dem Fahrrad in Kontakt kommt, mit einer Auflage aus besonders weichem bzw. besonders friktivem Kunststoff zu versehen. Hier bietet sich zum Beispiel ein TPE an, bzw. idealerweise ein weicher Kunststoff, der durch Overmolding auf den Rohling des Hakens aufgebracht und mit diesem fest verbunden worden ist.

## BEZUGSZEICHENLISTE

| 1 | Rucksacktragesystem |
|---|---|
| 2 | Gestell |
| 3 | Stab- bzw. Rohrrahmen |
| 4 | Rückenplatte |
| 5 | Schulterträger |
| 6 | erster Haken |
| 7 | zweiter Haken |
| 8 | Montageöffnungen in der Rückenplatte |
| 9 | Montageöffnungen in der Rückenplatte |
| 10 | Stab- oder Rohrabschnitt |
| 11 | Mittenabschnitt des Stab- oder Rohrabschnitts |
| 12 | erster Randabschnitt des Stab- oder Rohrabschnitts |
| 13 | zweiter Randabschnitt des Stab- oder Rohrabschnitts |
| 14 | Hüftgurt |
| 15 | Verbindungsabschnitt |
| 16 | Abstandhalter |
| 17 | formstabiler Hohlbehälter |
| 18 | nicht vergeben |
| 19 | nicht vergeben |
| 20 | Seitentasche |
| 21 | Gesäßtasche |
| 22 | Haupttasche |
| 23 | zusätzliche Horizontalstrebe |
| 24 | Hilfsrahmen |
| 25 | Eckverbinder |
| 26 | Rohr |
| 27 | Pin |
| 28 | Pin-Außengewinde |
| 29 | Nut |
| 30 | Pin Innengewinde |
| 31 | Rändelschraube |
| 32 | Rohrabschnitt eines Hakens |
| 33 | Rastplatte |
| 34 | Nut im Rahmen 26 |
| 35 | Führungstasche |
| 36 | Führungsschraube bzw. Führungsstift |
| 37 | Betätigungsansatz vorzugsweise nach Art eines pistolenartigen Abzugs |
| 38 | Feder |
| 39 | Klemmring |

| M | Mittellinie |
|---|---|
| FG | vertikale Gewichtskraft |
| ALPHA | spitzer Winkel |
| PD | Drehpfeil |
| Mw | Mittelwand |
| Ri | Rippe |
| DB | Durchbruch quer durch den Haken |

**Anmerkung zur Vergabe der Bezugszeichen:**

Bezugszeichen, die mit einem Pfeil auf die Baugruppe deuten, bezeichnen eine Baugruppe aus mehreren Einzelteilen oder Abschnitten, denen ihrerseits eigene Bezugszeichen zugeordnet sind. Bezugszeichen, die mit einem einfachen Strich auf ein Bauteil oder einen Abschnitt deuten, bezeichnen ein nicht weiter untergliedertes Einzelteil.

**Patentansprüche**

1. Rucksacktragesystem (1), zum freihändigen Rückentransport eines Fahrrades, mit einem mit Schulterträgern (5) ausgerüsteten Gestell (2) und einer Fahrradhalterung zum gestellfesten Befestigen des Fahrrades, wobei die Fahrradhalterung eine erste und eine zweite Verankerung umfasst, die räumlich getrennt voneinander ausgebildet sind, **dadurch gekennzeichnet, dass** die erste und die zweite Verankerung in Richtung entlang der , bei bestimmungsgemäßer Nutzung durch die Schulterträger (5) vorgegebenen, Hochachse des Trägers in unterschiedlicher Höhe angebracht sind und die erste und die zweite Verankerung jeweils ein starrer Haken (7) sind, wobei der erste Haken (6) in einer horizontalen Ebene liegt und der zweite Haken (7) in einer vertikalen Ebene liegt.

2. Rucksacktragesystem (1) nach Anspruch 1, **dadurch gekennzeichnet, dass** die erste Verankerung so gestaltet ist, dass sie keine Vertikalkräfte aufnimmt.

3. Rucksacktragesystem (1) nach Anspruch 1, **dadurch gekennzeichnet, dass** der in der vertikalen Ebene liegende Haken (7) unbeweglich mit dem Gestell (2) verbunden ist.

4. Rucksacktragesystem (1) nach Anspruch 1, **dadurch gekennzeichnet, dass** der in der horizontalen Ebene liegende Haken (6) unbeweglich mit dem Gestell (2) verbunden ist.

5. Rucksacktragesystem (1) nach einem der vorhergehenden Ansprüche, **dadurch gekennzeichnet, dass** die Haken (6, 7) so angeordnet sind, dass das Fahrrad so in die Haken (6, 7) eingehängt werden kann, dass es im Wesentlich hochkant mit dem Vorderrad nach oben gerichtet getragen werden kann.

6. Rucksacktragesystem (1) nach einem der vorhergehenden Ansprüche, **dadurch gekennzeichnet, dass** die zweite Verankerung bzw. der der zweite Haken (7) so angebracht und ausgerichtet ist, dass das Fahrrad nach dem Einhängen unter dem Einfluss seiner Gewichtskraft (FG) die Tendenz hat, sich so zu drehen, dass es in den ersten Haken (6) hineingedrückt wird.

7. Rucksacktragesystem (1) nach einem der vorhergehenden Ansprüche, **dadurch gekennzeichnet, dass** mindestens einer, besser alle Haken (6, 7) zum Einhängen des Fahrrades mit einer reibungserhöhenden Oberfläche versehen sind, vorzugsweise aus Gummi, Kautschuk oder einem thermoplastischen Elastomer.

8. Rucksacktragesystem (1) nach einem der vorhergehenden Ansprüche, **dadurch gekennzeichnet, dass** mindestens einer, besser alle Haken (6, 7) zum Einhängen des Fahrrades zwei V-förmig zueinander angeordnete Schenkel besitzen, die sich derart nach außen öffnen, dass sie zwischen sich Fahrradrahmenrohre mit Nenndurchmessern von 28 mm bis 55 mm einklemmen können.

9. Rucksacktragesystem (1) nach einem der vorhergehenden Ansprüche, **dadurch gekennzeichnet, dass** die erste Verankerung bzw. der erste Haken (6) in vertikaler Richtung in verschiedenen Positionen an dem Gestell (2) befestigt werden kann, vorzugsweise mithilfe eines oder mehrerer Langlöcher.

**Claims**

1. A backpack support system (1) for transporting a bike on the back of a wearer in a hands-free way, comprising a frame (2) equipped with shoulder straps (5) and a bike mount for fastening the bike to the frame, wherein the bike mount comprises a first anchoring point and a second anchoring point which are embodied spaced apart from each other, **characterized in that** the first and the second anchoring points are mounted at different heights in the direction along the vertical axis of the wearer that is predetermined with proper use by the shoulder straps (5), and the first and the second anchoring points are each rigid hooks (7), wherein the first hook (6) lies in a horizontal plane and the second hook (7) lies in a vertical plane.

2. The backpack support system (1) according to claim 1, **characterized in that** the first anchoring point is designed so that it does not absorb any vertical forces.

3. The backpack support system (1) according to claim 1, **characterized in that** the hook (7) lying in the vertical plane is connected to the frame (2) in a non-moving manner.

4. The backpack support system (1) according to claim 1, **characterized in that** the hook (6) lying in the horizontal plane is connected to the frame (2) in a non-moving manner.

5. The backpack support system (1) according to one of the preceding claims, **characterized in that** the hooks (6, 7) are positioned so that the bike can be hung in the hooks (6, 7) in such a way that the bike can be carried essentially in an upended manner with the front wheel pointing upward.

6. The backpack support system (1) according to one of the preceding claims, **characterized in that** the second anchoring point or the second hook (7) is mounted and oriented in such a way that after the bike is hung, the bike tends to rotate under the influence of its weight force (FG) so that the bike is pushed into the first hook (6).

7. The backpack support system (1) according to one of the preceding claims, **characterized in that** for hanging the bike at least one, better all, hooks (6, 7) is/are provided with a friction-increasing surface, preferably made of rubber, caoutchouc or a thermoplastic elastomer.

8. The backpack support system (1) according to one of the preceding claims, **characterized in that** for hanging the bike at least one, better all, hooks (6, 7) have two legs which are arranged in a V-shape relative to each other and which open outward in such a way that between themselves, they are able to clamp bike frame tubes with nominal diameters of 28 mm to 55 mm.

9. The backpack support system (1) according to one of the preceding claims, **characterized in that** the first anchoring point or the first hook (6) can be fastened to the frame (2) at different positions in the vertical direction, preferably by means of one or more long holes.

**Revendications**

1. Système porteur de sac à dos (1) pour transporter un vélo à mains libres sur le dos d'un porteur, comprenant un châssis (2) équipé de bretelles (5) et un porte-vélo pour fixer le vélo au châssis, dans lequel le porte-vélo comprend un premier point d'ancrage et un deuxième point d'ancrage qui sont espacés l'un de l'autre, **caractérisé en ce que** les premier et deuxième points d'ancrage sont montés à des hauteurs différentes dans la direction le long de l'axe vertical du porteur, qui est prédéterminée par les bretelles (5) en cas d'utilisation conforme à l'emploi prévu, et les premier et deuxième points d'ancrage sont chacun des crochets rigides (7), le premier crochet (6) se trouvant dans un plan horizontal et le deuxième crochet (7) se trouvant dans un plan vertical.

2. Système porteur de sac à dos (1) selon la revendication 1, **caractérisé en ce que** le premier point d'ancrage est conçu de manière à n'absorber aucunes forces verticales.

3. Système porteur de sac à dos (1) selon la revendication 1, **caractérisé en ce que** le crochet (7) se trouvant dans le plan vertical est relié au châssis (2) de manière immobile.

4. Système porteur de sac à dos (1) selon la revendication 1, **caractérisé en ce que** le crochet (6) se trouvant dans le plan horizontal est relié au châssis (2) de manière immobile.

5. Système porteur de sac à dos (1) selon l'une des revendications précédentes, **caractérisé en ce que** les crochets (6, 7) sont disposés de telle manière que le vélo puisse être accroché dans les crochets (6, 7) de sorte que le vélo puisse être porté essentiellement de manière verticale avec la roue avant dirigée vers le haut.

6. Système porteur de sac à dos (1) selon l'une des revendications précédentes, **caractérisé en ce que** le deuxième point d'ancrage ou le deuxième crochet (7) est monté et orienté de telle manière qu'après avoir accroché le vélo, le vélo a tendance à tourner sous l'influence de sa force de poids (FG) de telle manière qu'il soit poussé dans le premier crochet (6).

7. Système porteur de sac à dos (1) selon l'une des revendications précédentes, **caractérisé en ce que**, pour accrocher le vélo, au moins un crochet, mieux encore, tous les crochets (6, 7) est/sont pourvu(s) d'une surface augmentant le frottement, de préférence réalisée en gomme, caoutchouc ou en un élastomère thermoplastique.

8. Système porteur de sac à dos (1) selon l'une des revendications précédentes, **caractérisé en ce que**, pour accrocher le vélo, au moins un crochet, mieux encore, tous les crochets (6, 7) ont deux branches qui sont disposées en forme de V l'une par rapport à l'autre et qui s'ouvrent vers l'extérieur de telle sorte qu'elles soient capables de serrer des tubes de cadre de vélo avec des diamètres nominaux de 28 mm à 55 mm entre eux.

9. Système de support de sac à dos (1) selon l'une des revendications précédentes, **caractérisé en ce que** le premier point d'ancrage ou le premier crochet (6) peut être fixé au châssis (2) à différentes positions dans le sens vertical, de préférence par moyen d'un ou plusieurs trous longs.

**Fig. 1**

**Fig. 2**

6

4

7

ALPHA

**Fig. 3**

Rahmen Ø45

6,7

Rahmen Ø30

**Fig. 4**

**Fig. 5**

EP 3 357 371 B1

**Fig. 6**

18

Fig. 7

**Fig. 8**

**Fig. 9**

**Fig. 10**

Section view A-A

**Fig. 11**

**Fig. 10a**

EP 3 357 371 B1

Fig. 14

Fig. 12

**Fig. 13**

Section view B-B

**Fig. 15**

**Fig. 16**

EP 3 357 371 B1

**IN DER BESCHREIBUNG AUFGEFÜHRTE DOKUMENTE**

**In der Beschreibung aufgeführte Patentdokumente**

- DE 202011072 U1

- CZ 3470 U